# EUROPEAN PATENT APPLICATION

(11) **EP 4 776 364 A1**
(43) Date of publication of application: **15.07.2026**
(21) Application number: 25867142.9
(22) Date of filing: 21.10.2025
(51) Int. Cl.: H01M 10/04, H01M 50/167

(54) **HEIGHT ADJUSTMENT JIG FOR CYLINDRICAL BATTERY CELLS**

(30) Priority: 22.11.2024 KR 20240168215
(71) Applicant: LG ENERGY SOLUTION, LTD., Seoul 07335 (KR)
(72) Inventor: SO, Gyeong Yong, Daejeon 34122 (KR); PARK, Kyeong Hoon, Daejeon 34122 (KR); KIM, Dong Min, Daejeon 34122 (KR)
(74) Representative: Goddar, Heinz J.
(86) International application number: PCT/KR2025/016695
(87) International publication number: WO 2026/111204

(57) **Abstract**

Disclosed is a height adjustment jig for cylindrical battery cells, the height adjustment jig including a support unit having a cylindrical mounting portion formed in the center thereof and a pressing unit configured to press a cylindrical battery cell received in the mounting portion, wherein the support unit includes a lower portion of the support unit having an inner diameter corresponding to the outer diameter of the cylindrical battery cell, an upper portion of the support unit having an inner diameter greater than the inner diameter of the lower portion of the support unit, and a stepped portion located between the lower portion of the support unit and the upper portion of the support unit, and the support unit is configured in a structure in which a plurality of units, such as four or more even-numbered units, is coupled to each other.

## Description

### [Technical Field]

This application claims the benefit of priority to Korean Patent Application No. 2024-0168215 filed on November 22, 2024, the disclosure of which is incorporated herein by reference in its entirety.

The present invention relates to a height adjustment jig for cylindrical battery cells. More particularly, the present invention relates to a height adjustment jig for cylindrical battery cells capable of preventing appearance defects from occurring on an upper end of a side surface of a cylindrical battery cell during a sizing process for standardizing the height of the cylindrical battery cell.

### [Background Art]

Lithium secondary batteries, which are charged and discharged by the migration of lithium ions, are used not only for small battery cells used in mobile devices and small electronic products due to high energy density and high charging voltage but also for medium and large battery packs used as energy sources for electric vehicles and energy storage systems that require high power and high voltage.

Based on the shape of a battery case, the lithium secondary batteries are classified into a cylindrical secondary battery having an electrode assembly mounted in a cylindrical metal can, a prismatic secondary battery having an electrode assembly mounted in a prismatic metal can, and a pouch-shaped secondary battery having an electrode assembly mounted in a pouch-shaped case made of an aluminum laminate sheet. Thereamong, the cylindrical secondary battery has advantages of relatively large capacity and structural safety.

Cylindrical battery cells are manufactured with standardized height and diameter specifications. In addition, when manufacturing a medium or large battery pack including a plurality of cylindrical battery cells, a process of equalizing the height of the cylindrical battery cells is performed to ensure that all of the cylindrical battery cells have the same height. This process is called a sizing process.

Generally, the sizing process is performed using a method of downwardly pressing a cylindrical battery cell from above using a punch in the state in which a cylindrical side surface of the cylindrical battery cell is fixed using a fixing jig. Conventionally, the sizing process is performed in the state in which the entirety of the side surface of the cylindrical battery cell is fixed, whereby the cylindrical battery cell is pressed by the punch in the state in which an upper part of the cylindrical battery cell is in tight contact with the fixing jig. The cylindrical battery cell in tight contact with the fixing jig is pressed by the punch, whereby the height of the cylindrical battery cell is reduced. At this time, appearance defects such as scratches occur on an upper part of the side surface of the cylindrical battery cell.

In order to solve the above problem, it is necessary to install an apparatus for applying oil to the part of the fixing jig in tight contact with the cylindrical battery cell before placing the cylindrical battery cell in the fixing jig. However, the process lengthens and production costs increase due to the need to additionally provide the process for applying oil and the apparatus therefor.

Patent Document 1 relates to a cylindrical battery crimping apparatus, wherein the crimping apparatus includes a fixing chuck unit configured to wrap around at least a part of a battery can during a crimping process and a multi-stage press punch configured to descend sequentially in order of increasing inner diameter to press an upper end of the battery can, thereby forming a crimped shape on the battery can.

Patent Document 1 discloses technology for deforming the upper end of the cylindrical battery, wherein the crimping process is performed on the cylindrical battery, but and does not suggest technology for preventing appearance defects on the cylindrical battery cell during the sizing process.

Therefore, there is a need for technology capable of preventing scratches from forming on an upper end of a side surface of the cylindrical battery cell during a sizing process of the cylindrical battery cell, thereby reducing the appearance defect rate.

### (Prior Art Document)

(Patent Document 1) Korean Patent Application Publication No. 2021-0145565 (2021.12.02)

### [Disclosure]

### [Technical Problem]

The present invention has been made in view of the above problems, and it is an object of the present invention to provide a height adjustment jig for cylindrical battery cells capable of preventing an upper end of a support unit configured to fix and support a cylindrical battery cell from coming into tight contact with an upper part of a side surface of the cylindrical battery cell during a sizing process, thereby preventing appearance defects of the cylindrical battery cell.

### [Technical Solution]

A height adjustment jig for cylindrical battery cells according to the present invention to accomplish the above object includes a support unit having a cylindrical mounting portion formed in the center thereof and a pressing unit configured to press a cylindrical battery cell received in the mounting portion, wherein the support unit includes a lower portion of the support unit having an inner diameter corresponding to the outer diameter of the cylindrical battery cell, an upper portion of the support unit having an inner diameter greater than the inner diameter of the lower portion of the support unit, and a stepped portion located between the lower portion of the support unit and the upper portion of the support unit, and the support unit is configured in a structure in which a plurality of units, such as four or more even-numbered units, is coupled to each other.

In the height adjustment jig for cylindrical battery cells according to the present invention, the inner diameter of the stepped portion may be greater than the inner diameter of the lower portion of the support unit and less than the inner diameter of the upper portion of the support unit.

In the height adjustment jig for cylindrical battery cells according to the present invention, in the state in which the cylindrical battery cell is mounted in the mounting portion of the support unit, the lower portion of the support unit may be in tight contact with a cylindrical side surface of the cylindrical battery cell, and the stepped portion may be spaced apart from the cylindrical side surface of the cylindrical battery cell.

In the height adjustment jig for cylindrical battery cells according to the present invention, the difference between the diameter of the stepped portion and the diameter of the lower portion of the support unit may be 1.0 mm or less.

In the height adjustment jig for cylindrical battery cells according to the present invention, the support unit may include a first unit, a second unit, a third unit, and a fourth unit divided into four equal parts, the first unit, the second unit, and the third unit being disposed radially to constitute the cylindrical mounting portion.

In the height adjustment jig for cylindrical battery cells according to the present invention, each of the first unit, the second unit, the third unit, and the fourth unit may include a coupling portion extending to a side opposite an inner surface constituting the mounting portion.

In the height adjustment jig for cylindrical battery cells according to the present invention, each of coupling surfaces at which the first unit, the second unit, the third unit, and the fourth unit are coupled to each other may match a vertical section of the support unit.

In the height adjustment jig for cylindrical battery cells according to the present invention, the angle between a circumscribed surface of the support unit and the coupling surface may be 45° to 135°.

The height adjustment jig for cylindrical battery cells according to the present invention may further include a working unit configured to allow the cylindrical battery cell to be mounted therein.

In the height adjustment jig for cylindrical battery cells according to the present invention, the pressing unit may include an extension portion having an outer periphery extending farther downward than a central portion, and the bottom of the extension portion may be flat.

In the height adjustment jig for cylindrical battery cells according to the present invention, the width of the bottom of the extension portion of the pressing unit may be equal to or greater than the width of a crimping portion of the cylindrical battery cell.

In the height adjustment jig for cylindrical battery cells according to the present invention, the outer diameter of the downwardly extending extension portion of the pressing unit may be less than the inner diameter of the upper portion of the support unit.

In addition, the present invention may provide various combinations of the above solving means.

### [Advantageous Effects]

According to the present invention, it is possible to prevent appearance defects such as scratches from occurring on an upper part of a side surface of a cylindrical battery cell during a sizing process of the cylindrical battery cell.

Furthermore, it is possible to omit a conventional process of applying oil to prevent appearance defects of the cylindrical battery cell during the sizing process, whereby it is possible to simplify the process and to reduce production costs.

### [Description of Drawings]

FIG. 1 is an exploded perspective view showing a pressing unit of a height adjustment jig for cylindrical battery cells according to the present invention and a cylindrical battery cell.
FIG. 2 is a perspective view showing the state in which the pressing unit of the height adjustment jig for cylindrical battery cells according to the present invention is mounted on the cylindrical battery cell.
FIG. 3 is a vertical sectional view showing the state in which the cylindrical battery cell is mounted in the height adjustment jig for cylindrical battery cells according to the present invention.
FIG. 4 is a partial enlarged view of FIG. 3.
FIG. 5 is a plan view of the pressing unit of the height adjustment jig for cylindrical battery cells according to the present invention.
FIG. 6 is a perspective view of the pressing unit of the height adjustment jig for cylindrical battery cells according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

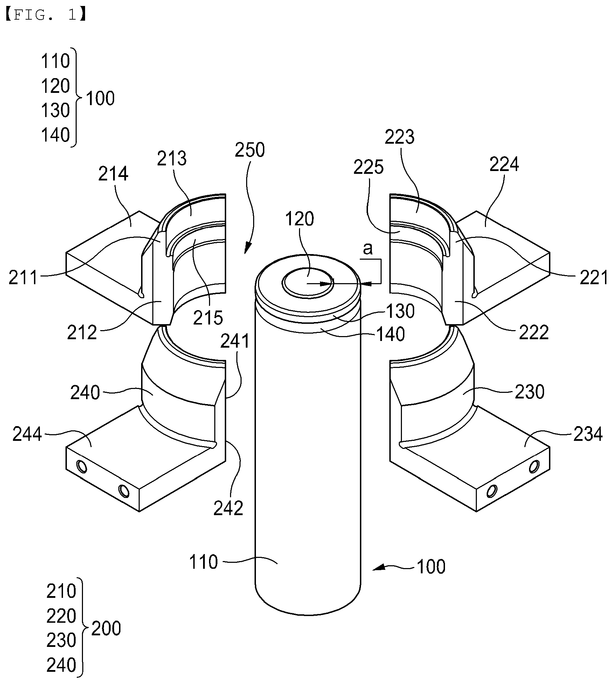

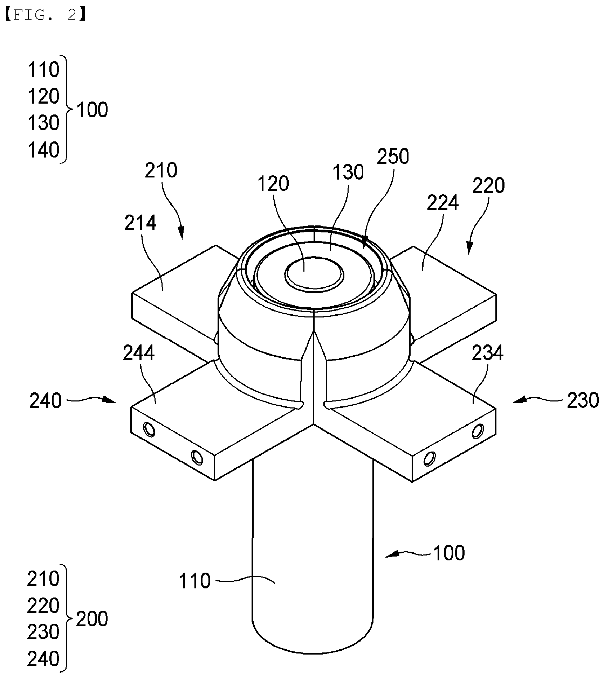

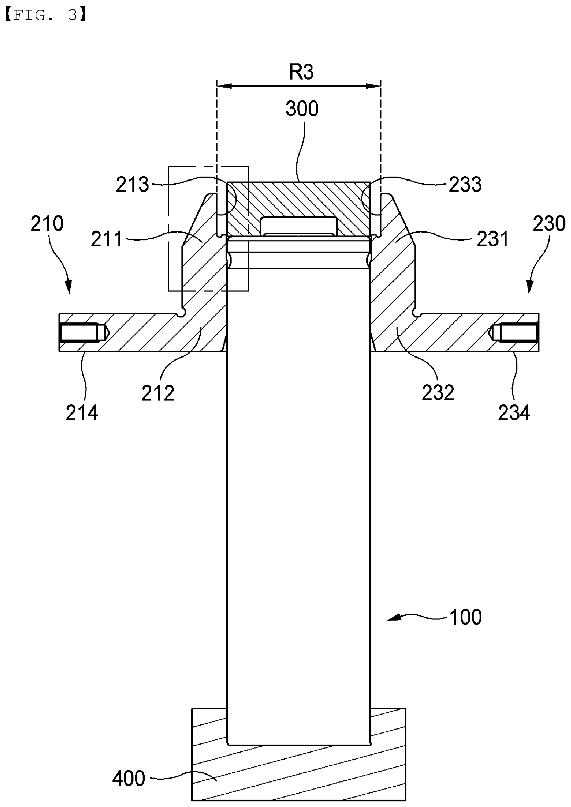

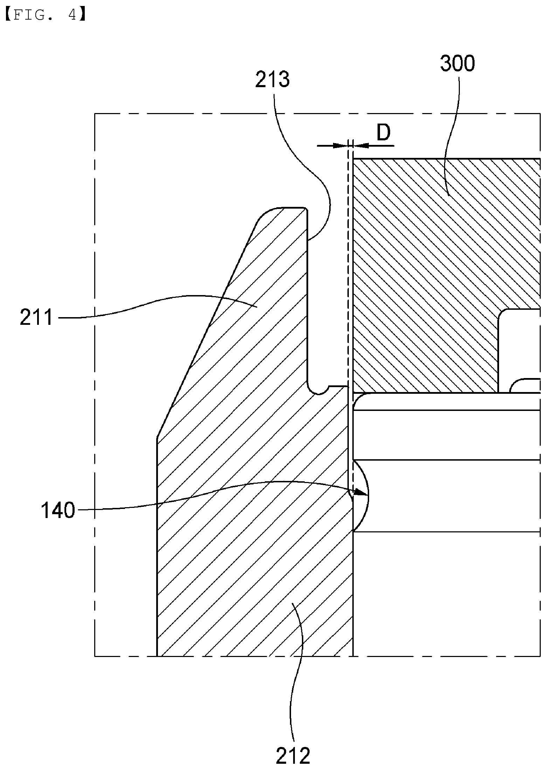

FIG. 1 is an exploded perspective view showing a pressing unit of a height adjustment jig for cylindrical battery cells according to the present invention and a cylindrical battery cell, FIG. 2 is a perspective view showing the state in which the pressing unit of the height adjustment jig for cylindrical battery cells according to the present invention is mounted on the cylindrical battery cell, and FIG. 3 is a vertical sectional view showing the state in which the cylindrical battery cell is mounted in the height adjustment jig for cylindrical battery cells according to the present invention. In addition, FIG. 4 is a partial enlarged view of FIG. 3.

Referring to FIGs. 1 to 4, the height adjustment jig for cylindrical battery cells according to the present invention includes a support unit 200 having a cylindrical mounting portion 250 formed in the center thereof, the cylindrical mounting portion corresponding to a cylindrical side surface 110 of the cylindrical battery cell 100, and a pressing unit 300 configured to press the cylindrical battery cell 100 received in the mounting portion 250.

The support unit 200 includes lower portions 212, 222, 232, and 242 of the support unit having an inner diameter corresponding to the outer diameter of the cylindrical battery cell 100, upper portions 211, 221, 231, and 241 of the support unit having an inner diameter greater than the inner diameter of the lower portions 212, 222, 232, and 242 of the support unit, and stepped portions 215 and 225 located between the lower portions 212, 222, 232, and 242 of the support unit and the upper portions 211, 221, 231, and 241 of the support unit, and the support unit 200 is configured in a structure in which a plurality of units, such as four or more even-numbered units, is coupled to each other.

The height adjustment jig for cylindrical battery cells is used in a sizing process in which the support unit 200 is disposed in contact with the side surface 110 of the cylindrical battery cell 100 and the pressing unit 300 disposed above the cylindrical battery cell 100 is moved downward to reduce the overall height of the cylindrical battery cell 100.

In the present invention, the cylindrical battery cell 100 may be standardized to a specified size by uniformly adjusting the height of the cylindrical battery cell using the height adjustment jig for cylindrical battery cells.

The support unit 200 includes a first unit 210, a second unit 220, a third unit 230, and a fourth unit 240 divided into four equal parts, the first unit, the second unit, and the third unit being disposed radially to constitute the mounting portion 250 in a shape in which three cylinders having the same center but different diameters are stacked. Alternatively, unlike what is shown in FIGs. 1 and 2, the plurality of units constituting the support unit may be configured in a sixpart division structure or an eight-part division structure.

The first unit 210, the second unit 220, the third unit 230, and the fourth unit 240 are configured in the same shape, and come into tight contact with the outer surface of the cylindrical battery cell in the state in which the first unit, the second unit, the third unit, and the fourth unit are separated from each other such that the side surface 110 of the cylindrical battery cell is not pressed. Even when external pressure is applied to the mounting portion 250 in the state in which the first unit 210, the second unit 220, the third unit 230, and the fourth unit 240 are coupled to each other, therefore, the inner diameter of the mounting portion may be maintained.

In order to prevent scratches from being formed on an upper part of the side surface 110 of the cylindrical battery cell 100 due to friction with inner surfaces 213 and 223 of the support unit 200 during the sizing process, the lower portions 212, 222, 232, and 242 of the support unit 200 are in tight contact with the cylindrical side surface 110 of the cylindrical battery cell 100, and the stepped portion 215 and 225 are spaced apart from the cylindrical side surface 110 of the cylindrical battery cell 100, in the state in which the cylindrical battery cell 100 is mounted in the mounting portion 250 of the support unit 200.

That is, the lower portions 212, 222, 232, and 242 of the support unit are in tight contact with the cylindrical side surface 110 in order to stably support the cylindrical battery cell 100 during the sizing process, and the stepped portion 215 and 225 are spaced apart from the cylindrical side surface 110 in order to prevent friction with the upper part of the cylindrical side surface 110.

Specifically, the distance D between the upper portions 211, 221, 231, and 241 of the support unit and the cylindrical side surface 110 of the cylindrical battery cell may be 1 mm or less, specifically 0.5 mm or less, and more specifically 0.25 mm or less. If the distance D is greater than 1 mm, foreign matter may accumulate between the support unit and the cylindrical battery cell, which is undesirable.

In addition, the distance D may be 0.1 mm or more in order to prevent scratches from being formed on an upper end of the cylindrical side surface.

The position and area at which the support unit 200 wraps around the cylindrical side surface 110 are not particularly limited. The support unit may wrap around the entirety of the cylindrical side surface 110, or may wrap around at least 10% of the total height of the cylindrical side surface 110.

However, it is preferable for the lower portions of the support unit in tight contact with the cylindrical side surface 110 of the cylindrical battery cell 100 to be formed so as not to be higher than at least a beading portion 140 of the cylindrical battery cell 100 and for the cylindrical side surface higher than at least the beading portion 140 of the cylindrical battery cell 100 to be disposed so as face the stepped portions 215 and 225. Alternatively, as shown in FIG. 4, the lower portions 212, 222, 232, and 242 of the support unit and the stepped portions 215 and 225 may be connected to each other at the position of the support unit facing the beading portion 140.

In addition, the first unit 210, the second unit 220, and the third unit 230, and the fourth unit 240 include coupling portions 214, 224, 234, 244 extending to the side opposite the inner surfaces 213 and 223 constituting the mounting portion 250. The plurality of units constituting the support unit may move such that the plurality of units comes into tight contact with each other to form the cylindrical mounting portion 250, and conversely, may move so as to be spaced apart from each other, whereby the plurality of units may be separated from the cylindrical battery cell. A moving means configured to move the plurality of units may be used. The coupling portions 214, 224, 234, 244 are parts configured to couple the moving means to the plurality of units.

FIG. 3 shows a working unit 400 disposed under the cylindrical battery cell 100 to allow the cylindrical battery cell 100 to be mounted therein. The positions of the cylindrical battery cell 100 and the height adjustment jig for cylindrical battery cells may be preset by the provision of the working unit 400. When the cylindrical battery cell 100 is disposed in the working unit 400, therefore, the height adjustment jig for cylindrical battery cells automatically comes into tight contact with the side surface of the cylindrical battery cell 100, and the sizing process may be performed.

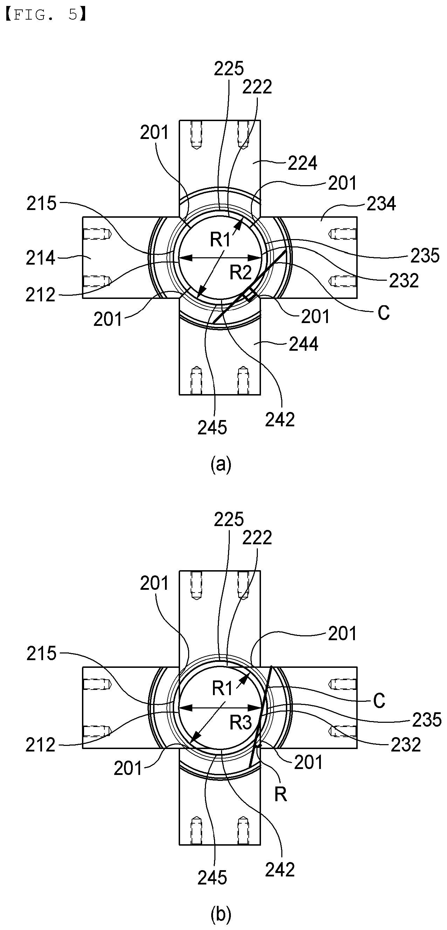

FIG. 5 is a plan view of the pressing unit of the height adjustment jig for cylindrical battery cells according to the present invention.

Referring to FIG. 5, the stepped portions 215, 225, 235, and 245 are spaced apart from the cylindrical side surface 110 of the cylindrical battery cell 100, and the lower portions 212, 222, 232, and 242 of the support unit are in tight contact with the cylindrical side surface 110. The inner diameter R1 of the stepped portions 215, 225, 235, and 245 is greater than the inner diameter R2 of the lower portions of the support unit, and the inner diameter R2 of the lower portions of the support unit is equal to the outer diameter of the cylindrical battery cell.

When the first unit 210, the second unit 220, the third unit 230, and the fourth unit 240 are coupled to each other in tight contact with each other, the first unit, the second unit, and the third unit must not overlap each other or must not be misaligned with each other to ensure that the state of coupling therebetween is maintained and the inner diameter of the mounting portion 250 is maintained even when external pressure is applied thereto. Therefore, each of coupling surfaces 201 at which the first unit 210, the second unit 220, the third unit 230, and the fourth unit 240 are coupled to each other is configured to match a vertical section obtained by cutting the support unit 200 in a vertical direction.

However, when cutting the support unit 200 in the vertical direction, the coupling surface 201 may meet a circumscribed surface C of the support unit 200 either perpendicularly as shown in (a) or at an angle as shown in (b).

Therefore, the angle R between the circumscribed surface C of the support unit 200 and the coupling surface 201 may be 45° to 135°.

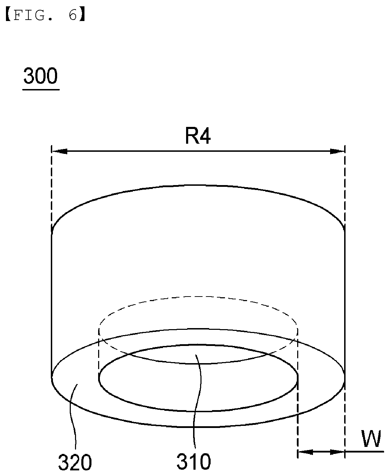

FIG. 6 is a perspective view of the pressing unit of the height adjustment jig for cylindrical battery cells according to the present invention.

Referring to FIG. 6, the pressing unit 300 includes an extension portion 320 having an outer periphery extending farther downward than a central portion 310. In the cylindrical battery cell 100, a top cap 120 may be configured to protrude farther than a crimping portion 130. The extension portion 320 provided on the outer periphery of the pressing unit 300 extends farther downward than the central portion 310 such that the pressing unit 300 does not press the top cap 120 but presses the crimping portion 130.

A lower end of the extension portion 320 presses against the crimping portion 130 of the cylindrical battery cell 100 to perform the sizing process. In order to prevent the pressing force of the pressing unit 300 from being concentrated on a specific part of the extension portion 320 when transmitted to the crimping portion 130, the bottom of the extension portion 320 is flat.

The width W of the bottom of the extension portion 320 of the pressing unit 300 may be equal to or greater than the width a of the crimping portion 130 of the cylindrical battery cell 100.

Meanwhile, in order to prevent friction between the pressing unit 300 and the upper portions 211, 221, 231, and 241 of the support unit when the pressing unit is inserted into the mounting portion 250 of the support unit 200, the outer diameter R4 of the downwardly extending extension portion of the pressing unit 300 may be less than the inner diameter R3 of the upper portions of the support unit.

If the sizing process of the cylindrical battery cell using the height adjustment jig for cylindrical battery cells according to the present invention is performed, as described above, it is possible to prevent appearance defects from occurring on the upper part of the side surface of the cylindrical battery cell.

Those skilled in the art to which the present invention pertains will appreciate that various applications and modifications are possible within the scope of the present invention based on the above description.

### (Description of Reference Symbols)

100: Cylindrical battery cell
110: Side surface
120: Top cap
130: Crimping portion
140: Beading portion
200: Support unit
201: Coupling surface
210: First unit
211, 221, 231, 241: Upper portions of support unit
212, 222, 232, 242: Lower portions of support unit
213, 223: Inner surfaces
214, 224, 234, 244: Coupling portions
215, 225, 235, 245: Stepped portions
220: Second unit
230: Third unit
240: Fourth unit
250: Mounting portion
300: Pressing unit
310: Central portion
320: Extension portion
400: Working unit
a: Width of crimping portion of cylindrical battery cell
C: Circumscribed surface
R1: Inner diameter of stepped portion
R2: Inner diameter of lower portion of support unit
R3: Inner diameter of upper portion of support unit
R4: Outer diameter of extension portion
W: Width of bottom of extension section

## Claims

1. A height adjustment jig for cylindrical battery cells, the height adjustment jig comprising:
a support unit having a cylindrical mounting portion formed in a center thereof; and
a pressing unit configured to press a cylindrical battery cell received in the mounting portion, wherein
the support unit comprises a lower portion of the support unit having an inner diameter corresponding to an outer diameter of the cylindrical battery cell, an upper portion of the support unit having an inner diameter greater than the inner diameter of the lower portion of the support unit, and a stepped portion located between the lower portion of the support unit and the upper portion of the support unit, and
the support unit is configured in a structure in which a plurality of units, such as four or more even-numbered units, is coupled to each other.

2. The height adjustment jig according to claim 1, wherein an inner diameter of the stepped portion is greater than the inner diameter of the lower portion of the support unit and less than the inner diameter of the upper portion of the support unit.

3. The height adjustment jig according to claim 1, wherein
in a state in which the cylindrical battery cell is mounted in the mounting portion of the support unit,
the lower portion of the support unit is in tight contact with a cylindrical side surface of the cylindrical battery cell, and
the stepped portion is spaced apart from the cylindrical side surface of the cylindrical battery cell.

4. The height adjustment jig according to claim 3, wherein a difference between the diameter of the stepped portion and the diameter of the lower portion of the support unit is 1.0 mm or less.

5. The height adjustment jig according to claim 1, wherein the support unit comprises a first unit, a second unit, a third unit, and a fourth unit divided into four equal parts, the first unit, the second unit, and the third unit being disposed radially to constitute the cylindrical mounting portion.

6. The height adjustment jig according to claim 5, wherein each of the first unit, the second unit, the third unit, and the fourth unit includes a coupling portion extending to a side opposite an inner surface constituting the mounting portion.

7. The height adjustment jig according to claim 5, wherein each of coupling surfaces at which the first unit, the second unit, the third unit, and the fourth unit are coupled to each other matches a vertical section of the support unit.

8. The height adjustment jig according to claim 7, wherein an angle between a circumscribed surface of the support unit and the coupling surface is 45° to 135°.

9. The height adjustment jig according to claim 1, further comprising a working unit configured to allow the cylindrical battery cell to be mounted therein.

10. The height adjustment jig according to claim 1, wherein
the pressing unit comprises an extension portion having an outer periphery extending farther downward than a central portion, and
a bottom of the extension portion is flat.

11. The height adjustment jig according to claim 10, wherein a width of the bottom of the extension portion of the pressing unit is equal to or greater than a width of a crimping portion of the cylindrical battery cell.

12. The height adjustment jig according to claim 10, wherein an outer diameter of the downwardly extending extension portion of the pressing unit is less than the inner diameter of the upper portion of the support unit.
